Europäisches Patentamt

European Patent Office

Office européen des brevets

(11) Veröffentlichungsnummer: **0 279 060**

**A2**

(12) **EUROPÄISCHE PATENTANMELDUNG**

(21) Anmeldenummer: 87118667.2

(22) Anmeldetag: 16.12.87

(51) Int. Cl.⁴: **B01J 8/02** , //C01B17/80

(30) Priorität: 20.02.87 DE 3705393

(43) Veröffentlichungstag der Anmeldung:
24.08.88 Patentblatt 88/34

(84) Benannte Vertragsstaaten:
**BE DE ES FR GB IT NL**

(71) Anmelder: **Uhde GmbH**
**Friedrich-Uhde-Strasse 15**
**D-4600 Dortmund 1(DE)**

(72) Erfinder: **Hoffmann, Egbert, Dipl.-Ing.**
**Am Versstück 2**
**D-5758 Fröndenberg(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Vorrichtung zur Katalyse von Schwefeldioxyd zu Schwefeltrioxyd.**

(57) Mit einer Vorrichtung (1) zur Katalyse von $SO_2$ zu $SO_3$ mit einem mehrere übereinander angeordnete Horden (Katalysatorbetten) (4) aufweisenden Kessel (2), wobei die einzelnen Horden (4) über gasdichte Trennböden (5) voneinander abgeschirmt sind, mit einer Gaszufuhr (3,7) oberhalb jeder Horde (4) und einem Gasabzug (6) unterhalb jeder Horde (4) soll eine Lösung geschaffen werden, mit der die Strömungsverhältnisse in den Katalysevorrichtungen verbessert und eine kampaktere Bauweise erreicht wird.

Dies wird dadurch erreicht, daß die Trennböden (5) schräg innerhalb des Kessels (2) derart angeordnet sind, daß sich zum Gasabzugsstutzen (6) ein sich erweiternder Strömungsquerschnitt unterhalb der jeweiligen Horde (4) ergibt.

FIG.1

## "Vorrichtung zur Katalyse von $SO_2$ zu $SO_3$"

Die Erfindung richtet sich auf eine Vorrichtung zur Katalyse von $SO_2$ zu $SO_3$ mit einem mehrere übereinander angeordnete Horden (Katalysatorbetten) aufweisenden Kessel, wobei die einzelnen Horden über gasdichte Trennböden voneinander abgeschirmt sind, mit einer Gaszufuhr oberhalb jeder Horde und einem Gasabzug unterhalb jeder Horde.

Derartige, sogenannte Kontaktkessel sind in unterschiedlichen Ausführungsformen bekannt, als Beispiel sei hier lediglich auf "Ullmann's Encyklopädie der technischen Chemie", 4. Auflage, Band 21, Seite 127 verwiesen. Dabei sind, unabhängig davon, ob es sich um ausgemauerte Stahl-oder Gußkontaktkessel handelt, häufig die Trennböden als Gewölbe ausgebildet, die Horden werden von diesen Gewölben getragen.

Es hat sich gezeigt, daß die bekannten Vorrichtungen nicht immer zu den gewünschten optimalen Strömungsbedingungen führen, zudem weisen die bekannten Vorrichtungen häufig eine vergleichsweise hohe, und damit kostenaufwendige Bauweise auf.

Aufgabe der Erfindung ist es, die Strömungsverhältnisse in den Katalysevorrichtungen zu verbessern und eine kompakte re Bauweise zu erreichen.

Bei einer Vorrichtung der eingangs bezeichneten Art wird diese Aufgabe gemäß der Erfindung dadurch gelöst, daß die Trennböden schräg innerhalb des Kessels derart angeordnet sind, daß sich zum Gasabzugsstutzen ein sich erweiternder Strömungsquerschnitt unterhalb der jeweiligen Horde und/oder ein sich verringernder Gaszufuhrquerschnitt oberhalb der jeweiligen Horde ergibt.

Mit der schrägen Trennbodenanordnung wird zum einen erreicht, daß strömungsgünstige Kanäle erzeugt werden, zum anderen kann damit eine kompaktere Bauweise erreicht werden, da Gewölbeflächen entfallen können. An dieser Stelle sei, radial durchströmte Katalysatorschichten betreffend, auf die DE-OS 34 13 421 der Anmelderin verwiesen.

Die Erfindung sieht in Ausgestaltung vor, daß der jeder Horde zugeordnete Abströmquerschnitt gleich oder größer als der Zuströmquerschnitt ausgebildet ist. Mit dieser Maßnahme soll erreicht werden, daß sich die Querschnitte nicht nur verringern und vergrößern, sondern in einer bestimmten Weise verringern und vergrößern, d.h. in der hier beanspruchten Art, um eine optimale Durchströmung der Katalysatorschichten zu erreichen.

In Ausgestaltung sieht die Erfindung auch vor, daß der Trennboden als Leitfläche für den Abzug der einen Stufe gleichzeitig die Leitfläche für den Zustrom der benachbarten Stufe bildet. Diese Gestaltungsart unterstützt den Wunsch nach möglichst kurzer Bauweise, ein Trennboden übernimmt dabei Doppelfunktionen, was die Ausbildung optimaler Anströmquerschnitte betrifft.

In weiterer Ausgestaltung ist vorgesehen, daß der Boden des Kessels als Leitfläche für die Unterstufe geneigt ausgebildet ist.

In Ausgestaltung kann erfindungsgemäß auch vorgesehen sein, daß die geneigten Trennböden zusätzlich zur Optimierung der Durchströmung der Horden in der senkrecht zur Neigung stehenden Richtung dachförmig abgewinkelt und/oder gewölbt ausgebildet sind, wobei auch vorgesehen sein kann, daß die Trennböden auf der einen Seite im umgekehrten Sinne als auf ihrer anderen Seite abgewinkelt und/oder gewölbt ausgebildet sind.

Die Erfindung sieht auch vor, daß eine von einer kaskadenartigen, jeweils die benachbarte Horde im nächsten Schritt beaufschlagenden Gasführung abweichende Gasführung vorgesehen ist.

Die Erfindung ist nachstehend anhand der Zeichnung beispielsweise näher erläutert, diese zeigt in

Fig. 1 eine vereinfachte Schnittdarstellung einer Vorrichtung nach der Erfindung,

Fig. 2 ein abgewandeltes Ausführungsbeispiel und in

Fig. 3 ein weiteres abgewandeltes Ausführungsbeispiel der Erfindung.

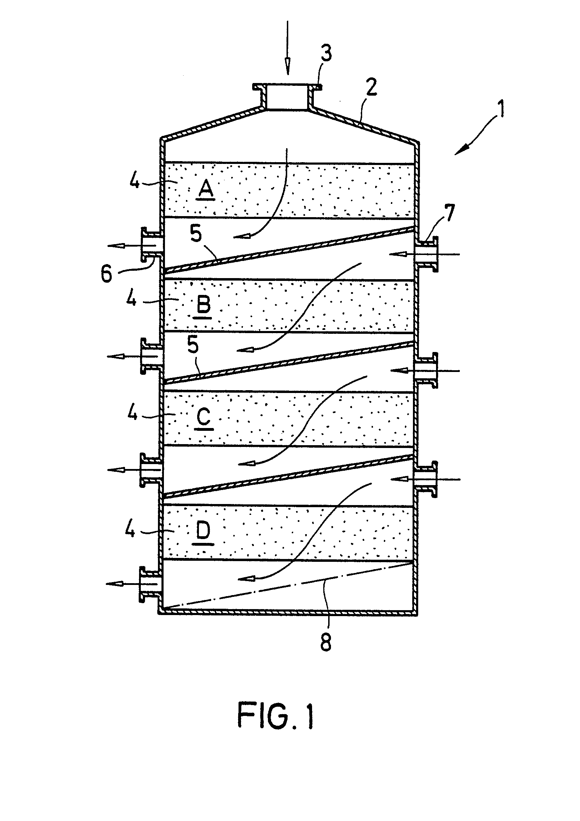

Im dargestellten Beispiel gemäß Fig. 1 besteht die allgemein mit 1 bezeichnete Vorrichtung aus einem Kessel 2, z.B. aus Stahl, mit einem oberen Gaseintrittsstutzen 3.

Innerhalb des Kessels 2 sind im dargestellten Beispiel vier Horden 4, d.h. Katalysatorbetten angeordnet, die vom Gas druchströmt werden.

Zusätzlich zu den Horden 4, die zur Kennzeichnung der Strömungsrichtung mit den Buchstaben A - D bezeichnet sind, sind im Kessel 2 - schräggestellte Trennböden 5 angeordnet.

Für das von oben einströmende Gas ergibt sich nach Durchdringen der Horde "A" ein zum Gasabzugsstutzen 6 sich erweiternder Strömungsquerschnitt. Das ggf. über einen Wärmetauscher geleitete Gas trifft nun in der zweiten Stufe beim Gaseintrittsstutzen 7 wieder in den Kessel 2 ein und findet durch den schräggestellten Trennboden 5 einen sich in Richtung auf die Horde "B" verengenden Strömungskanal vor, während zum Gasaustrittsstutzen erneut ein sich erweiternder Querschnitt vorliegt.

Gestrichelt ist in Fig. 1 dargestellt, daß der Boden 8 des Kessels ebenfalls geneigt ausgebildet sein kann.

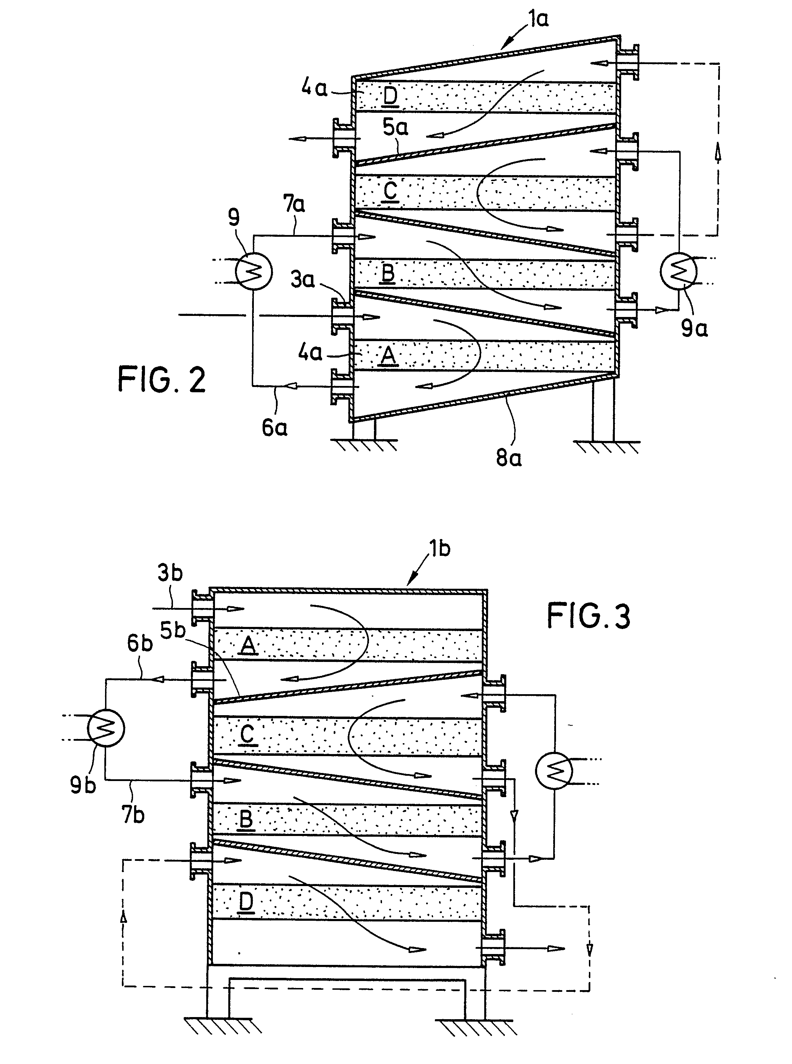

In Fig. 2 ist eine Vorrichtung 1a dargestellt, bei der die funktionsgleichen Teile gemäß Fig. 1 die gleichen Bezugszeichen tragen allerdings versehen mit einem "a". Hier ist die Hordenanordnung in der Strömungsrichtung von unten nach oben mit "A-E" bezeichnet. Der erste Gaseintrittsstutzen ist unten am Kessel 8a seitlich angeordnet und trägt das Bezugszeichen 3a, während der Austritt mit dem Pfeil 6a bezeichnet ist. Nach Durchströmen eines Wärmetauschers 9 gelangt das Gas zum Eintritt 7a in das zweite Katalysatorbett "B", verläßt dieses, durchströmt einen weiteren Wärmetauscher 9a und tritt dann von oben in das Katalysatorbett "C" ein, verläßt dieses und tritt ganz oben bei der Vorrichtung 1a erneut in das letzte Katalysatorbett "D" ein, um dann schließlich die Vorrichtung 1a zu verlassen.

In Fig. 3 ist schließlich eine weitere Gestaltung der Vorrichtung 1b angegeben, wobei die Katalysatorbetten in ih rer Strömungsfolge jeweils sich einmal überschlagend angeordnet sind, dem oberen ersten Katalysatorbett "A" folgt das Katalysatorbett "C", diesem wiederum das Katalysatorbett "B" und schließlich das untere Katalysatorbett "D". Die Strömungsführung entspricht dann bei dieser Folge, d.h. das oben bei 3b einströmende Gas verläßt nach Durchströmen der Horde "A" bei 6a die Vorrichtung 1, wobei 6b die Vorrichtung 1b durchströmt einen Wärmetauscher 9b und tritt, was mit dem Pfeil 7b bezeichnet ist, von oben in die Horde "B" ein. Der weitere Gaslauf ergibt sich dann aus den in der Figur wiedergegebenen Pfeilen.

Natürlich ist das beschriebene Ausführungsbeispiel der Erfindung noch in vielfacher Hinsicht abzuändern, ohne den Grundgedanken zu verlassen. So können die Trennböden 5, 5a, 5b gewölbt, dachförmig geneigt u. dgl. gestaltet sein, wesentlich ist die Optimierung des Strömungskanales und dgl. mehr.

## Ansprüche

1. Vorrichtung zur Katalyse von $SO_2$ zu $SO_3$ mit einem mehrere übereinander angeordnete Horden (Katalysatorbetten) aufweisenden Kessel, wobei die einzelnen Horden über gasdichte Trennböden voneinander abgeschirmt sind, mit einer Gaszufuhr oberhalb jeder Horde und einem Gasabzug unterhalb jeder Horde, dadurch gekennzeichnet, daß die Trennböden (5) schräg innerhalb des Kessels (2) derart angeordnet sind, daß sich zum Gasabzugstutzen (6) ein sich erweiternder Strömungsquerschnitt unterhalb der jeweiligen Horde (4) und/oder ein sich verringender Gaszufuhrquerschnitt oberhalb der jeweiligen Horde ergibt.

2. Vorrichtung nach Anspruch 1, dadurch gekennzeichnet, daß der jeder Horde (4) zugeordnete Abströmquerschnitt gleich oder größer als der Zuströmquerschnitt ausgebildet ist.

3. Vorrichtung nach Anspruch 1 oder 2, dadurch gekennzeichnet, daß der Trennboden (5) als Leitfläche für den Abzug (6) der einen Stufe gleichzeitig die Leitfläche für den Zustrom (7) der benachbarten Stufe bildet.

4. Vorrichtung nach einem der Ansprüche 1 bis 3, dadurch gekennzeichnet, daß der Boden (8) des Kessels (2) als Leitfläche für die untere Stufe geneigt ausgebildet ist.

5. Vorrichtung nach einem der vorangehenden Ansprüche, dadurch gekennzeichnet, daß die geneigten Trennböden (5) zusätzlich zur Optimierung der Durchströmung der Horden (4) in der senkrecht zur Neigungsrichtung stehenden Richtung dachförmig angewinkelt und/oder gewölbt ausgebildet sind.

6. Vorrichtung nach Anspruch 5, dadurch gekennzeichnet, daß die Trennböden (5) auf der einen Seite im umgekehrten Sinne als auf ihrer anderen Seite angewinkelt und/oder gewölbt ausgebildet sind.

7. Vorrichtung nach einem der vorangehenden Ansprüche, dadurch gekennzeichnet, daß eine von einer kaskadenartigen, jeweils die benachbarte Horde im nächsten Schritt beaufschlagenden Gasführung abweichende Gasführung vorgesehen ist.

FIG.1

FIG. 2

FIG.3